# EUROPÄISCHE PATENTSCHRIFT

(11) **EP 1 431 522 B1**
(45) Veröffentlichungstag und Bekanntmachung des Hinweises auf die Patenterteilung: **20.07.2011**
(21) Anmeldenummer: 03090411.4
(22) Anmeldetag: 28.11.2003
(51) Int. Cl.: F01D 21/04

(54) **Schutzring für die Fangschicht des Schutzgehäuses des Fans eines Gasturbinentriebwerks**
Containment ring for the fan casing of a gas turbine engine
Anneau de rétention pour carter de soufflante d'une turbine à gaz

(30) Priorität: 20.12.2002 DE 10259943
(43) Veröffentlichungstag der Anmeldung: 23.06.2004
(73) Patentinhaber: Rolls-Royce Deutschland Ltd & Co KG, 15827 Dahlewitz (DE)
(72) Erfinder: Schreiber, Karl, 15806 Mellensee (DE)
(74) Vertreter: Wablat, Wolfgang

(56) Entgegenhaltungen:
- FR-A- 2 444 800
- GB-A- 2 365 926
- US-A- 2 999 667
- US-A- 4 411 589
- US-A- 5 328 324
- US-A- 5 447 411

## Beschreibung

Die Erfindung bezieht sich auf einen Schutzring gemäss Anspruch 1 für die Fangschicht des Schutzgehäuses des Fans eines Gasturbinentriebwerkes, bestehend aus im Wechsel angeordneten, adhäsiv miteinander verbundenen Lagen aus jeweils einem Metallgurt und einer polymerimprägnierten Faserschicht.

Das Gebläse (oder der Fan) eines Strahltriebwerks für Flugzeuge ist unter den maximalen Leistungsanforderungen während der Startphase höchsten Belastungen ausgesetzt, die im Extremfall, wenn z. B. große Vögel oder Gegenstände auf der Startbahn vom Fan angesaugt werden und mit hoher kinetischer Energie auf das Gebläse treffen, zum Bruch der Fanschaufeln führen können. Bei einem derartigen Ereignis muss in jedem Fall verhindert werden, dass abgebrochene Teile des Gebläses das Gehäuse des Triebwerks durchschlagen, um schwerwiegende Folgen am Flugzeug selbst zu vermeiden. Zur Verhinderung einer Zerstörung des Triebwerks ist der besonders gefährdete Gehäusebereich am Außenumfang des Gebläses von einem in besonderer Weise ausgebildeten, auch als Containment bezeichneten Fan-Schutzgehäuse oder Schutzring umgeben.

Es wird zwischen zwei nach Ausbildung und Funktion unterschiedlichen Arten von Schutzgehäusen unterschieden, und zwar dem Voll-Containment und dem Durchschlag-Containment.

Das Voll-Containment ist so ausgelegt, dass eine abgebrochene Fanschaufel oder ein Schaufelfragment zwar eine Deformation des Schutzringes bewirken, aber den Schutzring nicht durchschlagen kann, und das Triebwerk mithin, ohne weiteren Schaden anzurichten, über den sogenannten Bypassduct verlassen kann. Diese funktionell vorteilhafte Lösung ist jedoch insofern nachteilig, als ein derartiges Schutzgehäuse aus einem kompakten Metallring besteht und dadurch ein hohes Gewicht aufweist.

Ein bekanntes Durchschlag-Containment umfasst einen in der Wandstärke schwach ausgelegten Metallring, der von einem abgebrochenen Gebläseteil durchschlagen werden kann, wobei aber das Gebläsefragment von einem am Außenumfang des Metallringes angeordneten Gewebe, der sogenannten Fangschicht, zurückgehalten wird. Das gegenüber dem Voll-Containment deutlich leichtere und insofern vorteilhafte Durchschlag-Containment bereitet jedoch nach dem Durchschlagen dahingehend Probleme, als das durch die Havarie beschädigte, nunmehr in Unwucht laufende Gebläserad (Fan) Schwingungen im Triebwerksgehäuse erzeugt, die zu einer Vergrößerung der an der Durchschlagstelle des Metallringes vorhandenen Risse und zu entsprechenden Folgeschäden führen kann.

Bei einem in der US 4 699 567 beschriebenen Durchschlag-Containment ist ein starrer, dünnwandiger Zylinder aus Leichtmetall oder faserverstärktem Kunstharz zunächst mit verwebten Faserstoffmaterialschichten, die aus einzelnen Materialstücken bestehen, beschichtet, und auf diese inneren Schichten sind weitere Faserstoffschichten mit kontinuierlicher Bahnlänge gewickelt. Die Außenfläche des Containments ist mit einer undurchlässigen metallischen oder nichtmetallischen Schutzschicht überzogen. Ein weggeschleudertes Schaufelteil durchschlägt den Innenring (metallischen Schutzring), wird dann mit den inneren Fasermaterialstücken umwickelt und abgepolstert und wird schließlich an den äußeren kontinuierlichen Fasermaterialschichten, die sich elastisch deformieren und daher die Stoßenergie absorbieren, aufgefangen. Ein weiteres Fortschreiten der an dem starren Schutzring des Containments entstandenen Schäden kann jedoch nicht verhindert werden.

Bei einem aus der US 5 486 086 bekannten Fangehäuse ist der innere starre Schutzring, der die Fanschaufeln im Abstand umgibt, an der Außenfläche mit einer Vielzahl von in Längs- und Umfangsrichtung verlaufenden Rippen ausgebildet, die ein weiteres Fortschreiten der Risse über die durch die Rippen versteiften Materialbereiche hinaus verhindern sollen.

Ein aus der GB-A-2365926 vorbekannter Schutzring eines Gasturbinentriebwerkes besteht aus mehreren im Wechsel angeordneten, adhäsiv miteinander verbundenen Lagen aus jeweils einem Metallgurt und einer polymerimprägnierten Fasergewebeschicht. Dabei sind um eine innere Gehäusewand dünne, gewellte Metallbleche spiralförmig gewickelt und an den Berührungspunkten der Wellenberge sowie an den axialen Enden miteinander verschweißt. Die von den Wellentälern zwischen den gewellten Blechen gebildeten Hohlräume sind mit einem stoßabsorbierenden Schaum gefüllt. An der äußeren Umfangsfläche des gewickelten Wellblechmantels befindet sich zur weiteren Verbesserung des Stoßabsorptionsverhaltens des Fancontainments eine weitere Faserschicht.

Ferner ist aus US-A-4411589 ein Kompressorgehäuse bekannt, das innerhalb eines Gehäuseraums angeordnete, adhäsiv miteinander verbundene kreisförmige Ringe aus Composit-Material oder mit Composit ummanteltem Titan umfasst.

Die US-A-2999667 beschreibt eine Anordnung zum Schutz vor während der Rotation abgelösten Turbinenteilen, die einen die rotierenden Teile umgebenden inneren Ring und eine Vielzahl von Drahtgewebeschichten sowie ein äußeres rohrartiges Wandelement umfasst.

Der Erfindung liegt die Aufgabe zugrunde, einen Schutzring für den Fan (Gebläserad) eines Gasturbinentriebwerks zu schaffen, der einerseits ein hohes Stoßabsorptionsvermögen und ein gegenüber den bekannten Schutzringen verringertes Gewicht aufweist und andererseits ein Fortschreiten bzw. Vergrößern der im Durchschlagsbereich entstandenen Risse oder Löcher verhindert.

Diese Aufgabe wird mit einem Schutzring gemäss Anspruch 1 dadurch gelöst, dass sich die Enden der Metallgurte überlappen und durch einen Kleber miteinander verbunden sind, wobei die Fasergewebeschichten zwischen stirnseitig gegenüberliegenden Enden benachbarter Metallgurte kontinuierlich weitergeführt sind.

Aus den Unteransprüchen ergeben sich weitere Merkmale und vorteilhafte Weiterbildungen der Erfindung.

Der allgemeine Grundgedanke für die Ausbildung eines Schutzringes besteht darin, dass der im Abstand vom Außenumfang des Fan angeordnete Schutzring aus mehreren im Wechsel angeordneten Lagen von Metallblechgurten und polymergebundenen Fasergewebeschichten besteht. Die inneren Metallgurte können anstatt aus Blech auch aus einem von einem Metallgewebe gebildeten Metallgurt bestehen. Entsprechend der Anzahl der Lagen kann der Schutzring bei ausreichender Wandstärke als Voll-Containment oder bei geringer Wandstärke und einer am Außenumfang angeordneten Fangschicht als Durchschlag-Containment verwendet werden. In der Ausführung als Voll-Containment weist der Schutzring zäh-elastische Eigenschaften auf, um von Fanschaufelsegmenten verursachte Stöße ohne Zerstörung des Schutzringmaterials absorbieren zu können. Bei der Nutzung des Schutzrings als Durchschlag-Containment wird bei entsprechend geringer Wandstärke bewusst ein Durchschlagen des Schutzrings in Kauf genommen, wobei die Bruchstücke jedoch in der Fangschicht zurückgehalten werden. Aufgrund der erfindungsgemäß eingesetzten Materialkombination aus im Wechsel und in engem adhäsivem Verbund angeordneten dünnen Metallblechschichten und polymergebundenen Faserschichten ist trotz der durch die beschädigte Fanscheibe bewirkten Unwucht und der entsprechend großen mechanischen Belastung keine Vergrößerung der im Schutzring entstandenen Löcher und Risse mit den dann zu erwartenden Folgeschäden für das Triebwerk und das Flugzeug zu befürchten. Ein weiterer wesentlicher Vorteil des so ausgebildeten Schutzringes besteht sowohl beim Durchschlag-Containment als auch insbesondere beim Voll-Containment in der erheblichen Gewichtsersparnis.

Erfindungsgemäß werden zur Erzeugung eines geschlossenen Schutzringes die Enden des jeweiligen Metallgurtes überlappend durch einen Kleber verbunden, während die Fasergewebeschichten zwischen den gegenüberliegenden Enden benachbarter Metallgurte kontinuierlich weitergeführt sind. Dadurch sind die beabsichtigten Eigenschaften und eine innige Verbindung auch an der Stoßstelle gewährleistet. Zur Erzielung großer Wandstärken des Schutzringes kann eine Materialbahn mit geringer Stärke auch zu einem Schutzring gewickelt werden oder es können zwei oder mehrere Schutzringe mit entsprechend aufeinander abgestimmten Innen- und Außendurchmessern ineinander gesteckt und an den aneinandergrenzenden Flächen miteinander verbunden werden.

Zwei Ausführungsbeispiele des erfindungsgemäßen Schutzringes werden anhand von schematischen Zeichnungen näher erläutert. Es zeigt:
- Fig. 1: einen axialen Längsschnitt durch den Lufteintritts- bereich eines Gasturbinentriebwerkes,
- Fig. 2: die Einzelheit Z nach Fig. 1 als Schnitt durch die Wand eines Durchschlag-Schutzringes (Durchschlag- Containments),
- Fig. 3: die Einzelheit X nach Fig. 1 als Schnitt durch die Wand eines Vollschutzringes (Voll-Containment)und
- Fig. 4: einen vergrößerten Schnitt durch das für den Schutzring vorgesehene Compositmaterial an der Ver- bindungsstelle der Enden.

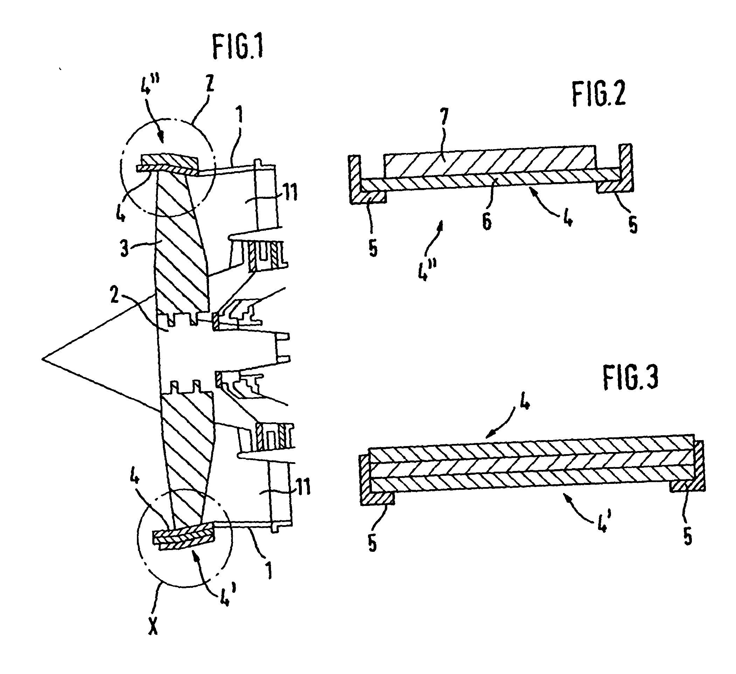

In Fig. 1 ist der Lufteintrittsbereich eines Gasturbinentriebwerks dargestellt, und zwar mit einem in einem Triebwerksgehäuse 1 umlaufenden Gebläserad, bestehend aus einer Fanscheibe 2 und an dieser angebrachten Fanschaufeln 3. Zum Schutz des Triebwerksgehäuses und des Triebwerks ist am Innenumfang des Triebwerksgehäuses 1 in dem oberhalb der Fanschaufeln 2 befindlichen Bereich ein Schutzring 4 (Containment) angebracht. Im Falle des überwiegend in der Startphase möglichen Auftreffens eines Objektes, z. B. eines großen Vogels, auf die Fanschaufeln 3 und einem dabei möglicherweise auftretenden Bruch verhindert der Schutzring 4, dass Fragmente der Fanschaufeln 3 das Triebwerk oder Triebwerksgehäuse zerstören. Der Schutzring 4 ist in Fig. 1 der Einfachheit halber einmal als mehrteiliger Vollschutzring oder Voll-Containment 4' (Einzelheit X) und einmal als Durchschlag-Containment 4" (Einzelheit Z) dargestellt. Tatsächlich ist im Abstand oberhalb der Enden der Fanschaufeln 3 entweder ein umlaufender Vollschutzring (als Voll-Containment 4') oder einen umlaufender Durchschlagschutzring mit Fangvorrichtung als Durchschlag-Containment 4" angeordnet.

Das Durchschlag-Containment 4" (Einzelheit Z in Fg. 1) umfasst - angeordnet zwischen zwei Flanschen 5 - einen aus mehreren Werkstofflagen bestehenden, hier als Durchschlaghülse 6 bezeichneten Schutzring 4 und eine auf dessen Außenumfangsfläche angebrachte Fangschicht 7, bestehend aus verwebten und/oder verwirkten Faserstoffmaterialschichten. Als Faserstoffmaterial sind aromatische Polyamidfasern, vorzugsweise unter der Bezeichnung KEVLAR vertriebene Faserstoffe verwendet.

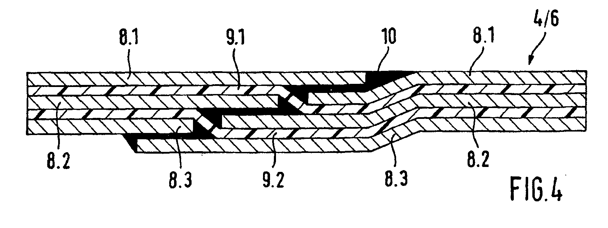

Bei einem Bruch einer Fanschaufel 3 können Fragmente der Fanschaufel 3 zwar die Durchschlaghülse 6 (Schutzring 4) durchdringen, werden aber von den Faserstoffen der Fangschicht 7 aufgefangen, so dass die Bruchstücke keine Folgeschäden verursachen können. Wichtig ist, dass durch die aufgrund eines Bruches einer Fanschaufel 3 verursachte erhebliche Unwucht des Gebläserades dennoch ein Fortschreiten oder Vergrößern der beim Durchschlagen der Fragmente in der Durchschlaghülse 6 erzeugten Risse bzw. Löcher verhindert wird. Das Vergrößern der Risse und Löcher wird durch die spezifische Ausbildung der Durchschlaghülse 6 aus einer Materialkombination erreicht, die, wie Fig. 4 zeigt, aus mehreren, im Wechsel angeordneten Lagen aus Metallgurten 8 und polymerimprägnierten Fasergewebeschichten 9 besteht. Die hohe mechanische Belastung der Durchschlaghülse 6 aufgrund der Unwucht des Gebläserades nach der oben beschriebenen Havarie wird zum einen von den dünnen Metallgurten 8 (8.1, 8.2, 8.3) und den Fasergewebeschichten 9 (9.1, 9.2) elastisch aufgenommen und zum anderen werden Risse und Löcher von den Querfasern der Fasergewebeschichten 9 elastisch zusammengehalten bzw. überbrückt, da sich die Risse nicht oder nur sehr langsam in den Fasergewebeschichten fortsetzen können.

In Fig. 4 ist ein Schnitt durch einen Teil einer Durchschlaghülse 6 an der Verbindungsstelle der beiden Enden des jeweiligen Metallgurtes 8; 8.1, 8.2, 8.3 gezeigt. Dabei sind die Enden des jeweiligen Metallgurtes 8; 8.1, 8.2, 8.3 überlappend angeordnet, während die Fasergewebeschichten 9; 9.1, 9.2 jeweils auch an der Stoßstelle kontinuierlich weiterlaufen und durch den mit Kleber 10 gefüllten Raum zwischen zwei gegenüberliegenden Enden unterschiedlicher Metallgurte 8.1 und 8.2 bzw. 8.2 und 8.3 geführt sind, d. h., die überlappenden bzw. einander gegenüberliegenden Enden der Metallgurte 8 sind durch den Kleber 10 verbunden.

In dem in Fig. 4 dargestellten Ausführungsbeispiel besteht die Durchschlaghülse 6 aus fünf Lagen, nämlich drei Metallgurten 8.1, 8.2 und 8.3 und zwei Faser-Polymer-Compositschichten 9.1 und 9.2. In jedem Fall sind aber die äußere und die innere Lage als Metallgurt 8.1, 8.3 ausgebildet, der gleichzeitig als Feuchteschutz dient.

Bei dem in Fig. 3 (Einzelheit X in Fig. 1) gezeigten Voll-Containment 4' (Vollschutzring) entfällt die Anordnung der Fangschicht 7. Stattdessen sind die Wandstärke des Schutzringes 4 und dementsprechend die Anzahl der im Wechsel angeordneten Metallgurte 8 und polymerimprägnierten Fasergewebeschichten 9 so gewählt, dass der Schutzring 4 nicht durchschlagen wird und Fragmente der Fanschaufel 3 über freie Durchgangskanäle 11 des Triebwerks nach hinten herausgeführt werden.

Um die für den Schutzring 4 für ein Voll-Containment 4' erforderliche, bei der Ausbildung zum Ring noch verformbare Wandstärke erzielen zu können, kann ein noch leicht verformbarer Materialstrang geringer Stärke auf den Vollschutzring in der erforderlichen Wandstärke gewickelt werden. Gleichermaßen ist es denkbar, zwei oder mehrere einzelne Schutzringe 4 als Hülsen geringer Wandstärke und mit aufeinander abgestimmtem Durchmesser ineinander zu stecken.

Der so ausgebildete Schutzring 4 (Vollschutzring), der ein gegenüber den bekannten Vollschutzringen deutlich verringertes Gewicht aufweist, absorbiert die von auftreffenden Fragmenten der Fanschaufel 3 erzeugten Stöße und federt diese elastisch ab. Gegebenenfalls durch die Stöße erzeugte Risse vergrößern sich jedoch durch die aufgrund der Havarie und des Bruches bewirkte Unwucht des Triebwerkes nicht weiter, da die fest mit den Metallgurten 8 verbundenen elastischen polymergebundenen Fasergewebeschichten 9 einen Rissfortschritt verhindern.

### Bezugszeichenliste

- 1: Triebwerksgehäuse
- 2: Fanscheibe
- 3: Fanschaufel
- 4: Schutzring
- 4': Voll-Containment (Vollschutzring)
- 4": Durchschlag-Containment
- 5: Flansche
- 6: Durchschlaghülse
- 7: Fangschicht
- 8: Metallgurt
- 8.1 - 8.3: Metallgurte
- 9, 9.1, 9.2: polymergebundene Fasergewebeschichten
- 10: Kleber
- 11: Durchgangskanal

## Patentansprüche

1. Schutzring für die Fangschicht des Schutzgehäuses des Fans eines Gasturbinentriebwerks, bestehend aus im Wechsel angeordneten, adhäsiv miteinander verbundenen Lagen aus jeweils einem Metallgurt (8) und einer polymerimprägnierten Faserschicht (9),
**dadurch gekennzeichnet,**
**dass** sich die Enden der Metallgurte (8.1, 8.2, 8.3) überlappen und durch einen Kleber (10) miteinander verbunden sind, wobei die Fasergewebeschichten (9.1, 9.2) zwischen stirnseitig gegenüberliegenden Enden benachbarter Metallgurte kontinuierlich weitergeführt sind.

2. Schutzring nach Anspruch 1, **dadurch gekennzeichnet, dass** zur Erzielung einer ausreichend großen Wandstärke mehrschichtige Bahnen aus Metallgurten (8) und polymergebundenen Fasergewebeschichten (9) spiralförmig zu einem Schutzring gewickelt sind.

3. Schutzring nach Anspruch 1, **dadurch gekennzeichnet, dass** die polymerimprägnierten Fasergewebeschichten (9) aus mit Polyester oder mit stark Energie absorbierenden Harzen imprägnierten Glasfasern und/oder Polyethylenfasern und/oder Polyamidfasern und/oder Aramidfasern und/oder Kohlefasern und die Metallgurte (8) aus einer Aluminium- oder Titan- oder Nickelbasislegierung bestehen.

4. Schutzring nach Anspruch 1, **dadurch gekennzeichnet, dass** die Innen- und Außenumfangsflächen aus Metallgurten (8) gebildet sind.

5. Schutzring nach Anspruch 1, **dadurch gekennzeichnet, dass** der äußere und der innere Metallgurt aus Blech und die metallischen Zwischengurte aus einem Metallgewebe auf der Basis von Nickel, Titan, Eisen oder Aluminium bestehen.

6. Schutzringvorrichtung, **dadurch gekennzeichnet, dass** der Schutzringvorrichtung zwei oder mehrere Schutzringe nach Anspruch 1 aufweist und dass zur Erzielung einer ansreinchend großen Wandstärke zwei oder mehrere Schutzringe nach Anspruch 1 mit aufeinander abgestimmten Durchmessern ineinander gesteckt sind.

## Claims

1. Protective ring for the trapping layer of the protective casing of the fan of a gas-turbine engine, including an alternation of adhesively interconnected strata, each consisting of a metal band (8) and a polymer-impregnated fiber-weave layer (9), **characterized in that** the ends of the respective metal bands (8.1, 8.2, 8.3) overlap and that they are joined by an adhesive (10), with the fiber-weave layers (9.1, 9.2) continuously extending between frontally opposite ends of adjacent metal bands.

2. Protective ring in accordance with Claim 1, **characterized in that**, multi-stratum strips of metal bands (8) and polymer-bonded fiber-weave layers (9) are wound spirally to obtain a protective ring of sufficient wall thickness.

3. Protective ring in accordance with Claim 1, **characterized in that** the polymer-impregnated fiber-weave layers (9) consist of glass fibers impregnated with polyester or highly energy-absorbing resins and/or polyethylene fibers and/or polyamide fibers and/or aramide fibers and/or carbon fibers and that the metal bands (8) are made of an aluminum or titanium or nickel-base alloy.

4. Protective ring in accordance with Claim 1, **characterized in that** both the inner and outer circumferential surfaces are formed by metal bands (8).

5. Protective ring in accordance with Claim 1, **characterized in that** the outer and inner metal bands are made of sheet metal and the metallic intermediate bands of a metal weave on the basis of nickel, titanium, iron or aluminum.

6. Protective ring arrangement, **characterized in that** the protective ring arrangement features two or several protective rings in accordance with Claim 1 and that two or more protective rings in accordance with Claim 1 with matching diameters are put into one another to obtain a sufficiently large wall thickness.

## Revendications

1. Anneau de protection pour la couche réceptrice du carter de protection de la soufflante d'un moteur à turbine à gaz, constitué de couches alternées reliées entre elles par adhérence et respectivement composées d'une bande métallique (8) et d'une couche de tissu en fibres (9) imprégnée de polymères, **caractérisé en ce que** les extrémités des bandes métalliques (8.1, 8.2, 8.3) se chevauchent et sont reliées entre elles par une colle (10), sachant que les couches de tissu en fibres (9.1, 9.2) sont prolongées en continu entre des extrémités de bandes métalliques voisines frontalement opposées.

2. Anneau de protection selon la revendication n° 1, **caractérisé en ce que** pour obtenir une épaisseur de paroi suffisamment grande, des bandes multicouches composées de bandes métalliques (8) et de couches de tissu en fibres (9) liées par polymères sont enroulées en spirale pour former un anneau de protection.

3. Anneau de protection selon la revendication n° 1, **caractérisé en ce que** les couches de tissu en fibres (9) imprégnées de polymères sont constituées de fibres de verre et/ou de fibres de polyéthylène et/ou de fibres de polyamide et/ou de fibres d'aramide et/ou de fibres de carbone imprégnées de polyester ou de résines absorbant fortement l'énergie, et que les bandes métalliques (8) sont composées d'un alliage à base d'aluminium, ou de titane, ou de nickel.

4. Anneau de protection selon la revendication n° 1, **caractérisé en ce que** les surfaces périphériques intérieures et extérieures sont formées par des bandes métalliques (8).

5. Anneau de protection selon la revendication n° 1, **caractérisé en ce que** les bandes métalliques extérieures et intérieures sont constituées de tôle et les bandes métalliques intermédiaires sont constituées d'un tissu métallique à base de nickel, de titane, de fer ou d'aluminium.

6. Système d'anneau de protection, **caractérisé en ce que** le système d'anneau de protection, présente deux ou plusieurs anneaux de protection selon la revendication n° 1, et que pour obtenir une épaisseur de paroi suffisamment grande, deux ou plusieurs anneaux de protection selon la revendication n° 1 sont emboîtés les uns dans les autres avec des diamètres ajustés entre eux.
